Europäisches Patentamt

European Patent Office

Office européen des brevets

(19)

(11) EP 0 931 602 A2

(12) EUROPÄISCHE PATENTANMELDUNG

(43) Veröffentlichungstag:
28.07.1999 Patentblatt 1999/30

(51) Int Cl.⁶: **B21C 37/083**

(21) Anmeldenummer: 99250007.4

(22) Anmeldetag: 12.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 26.01.1998 DE 19803776

(71) Anmelder: MANNESMANN Aktiengesellschaft
40213 Düsseldorf (DE)

(72) Erfinder:
• Kamps, Johannes, Dipl.-Ing.
41844 Wegberg (DE)
• Thieven, Peter, Dipl. Ing.
52064 Aachen (DE)

(74) Vertreter: Henze, Lothar et al
Meissner & Meissner,
Patentanwaltsbüro,
Hohenzollerndamm 89
14199 Berlin (DE)

(54) **Formalzenpaar in einem Vorbiegegerüst einer Rohrschweissanlage**

(57) Die Erfindung betrifft ein Formwalzenpaar in einem Vorbiegegerüst einer Rohrschweißanlage zur Herstellung von längsnahtgeschweißten Rohren, in dem das einzuformende ebene Band mittels oberer konvexer und unterer konkaver Fcrmwalzen zu der Vorform gebogen wird, aus der in nachfolgenden Verformungsstufen ein Schlitzrohr eingeformt wird, aus dem durch Längsnahtschweißen das fertige Rohr erzeugt wird.

Die Erfindung ist dadurch gekennzeichnet, daß die obere (1) und untere Formwalze (2) einen durch jeweils einen Kreisbogen beschreibbaren spiegelsymmetrischen Grundkonturschliff mit gemeinsamen Radienmittelpunkt (M) aufweisen, der bei der oberen Formwalze (1) in deren Kaliberflankenbereichen (6) beidseitig der Kalibermitte zwischen dieser und den Formwalzenkanten (7) durch minimale stetige Änderung des Kreisbogenradius R konkav eingezogen ist.

FIGUR 4

Printed by Jouve, 75001 PARIS (FR)

**Beschreibung**

Die Erfindung betrifft ein Formwalzenpaar in einem Vorbiegegerüst einer Rohrschweißanlage zur Herstellung von längsnahtgeschweißten Rohren, in dem das einzuformende ebene Band mittels oberer konvexer und unterer konkaver Formwalzen zu der Vorform gebogen wird, aus der in nachfolgenden Verformungsstufen ein Schlitzrohr eingeformt wird, aus dem durch Längsnahtschweißen das fertige Rohr erzeugt wird.

In konventionellen Rohrschweißanlagen wird ein von einem Coil abgewickeltes Band nacheinander in mehreren Verformungsstufen zu einem Schlitzohr verformt; die gegeneinander gebogenen Kanten des Schlitzrohres werden in einer Schweißeinrichtung längsnahtverschweißt und im Anschluß daran wird das Rohr gewöhnlich in einem Maßgebungsstich fertiggestellt. In dem ersten Vorbereitungsstich der Rohrschweißanlage werden bisher Vorbiegegerüste mit einer konkaven Unter- und einer konvexen Oberwalze eingesetzt, die das zunächst ebene Band in eine Form mit allgemein bogenförmigem Querschnitt überführen.

Eine Schwierigkeit bei dieser bekannten Art der Vorverformung besteht darin, daß beim Krümmen der gegenüberliegenden Längskanten des Bandes der vorgeformte Bogen dazu neigt, nach dem Durchgang durch das Formwalzenpaar zurückzufedern, was bedeutet, daß in den nachfolgenden Formstichen größere Kräfte ausgeübt werden müssen. Ein anderer nachteiliger Effekt besteht darin, daß in den Formwalzenpaaren des Vorbiegegerüstes das Band vor dem Eintritt in den Umformspalt nach unten durchgebogen wird und die untere Formwalze vorzeitig berührt. Dadurch wird diese Walze unnötig stark belastet und verschleißt in der Mitte, was zu Beschädigungen der Bandoberfläche führt.

Aufgabe der vorliegenden Erfindung ist es, ausgehend von einem Formwalzenpaar mit konvexer oberer und konkaver unterer Kontur den Konturverlauf so auszubilden, daß die Durchbiegung des Bandes nach unten beim Eintritt in den Umformspalt verringert und dadurch der Verschleiß der unteren Formwalze vermindert wird.

Zur Lösung der Aufgabe wird erfindungsgemäß vorgeschlagen, daß die obere und untere Formwalze einen durch jeweils einen Kreisbogen beschreibbaren spiegelsymmetrischen Grundkonturschliff mit gemeinsamem Radienmittelpunkt aufweist, der bei der oberen Formwalze in deren Kaliberflankenbereichen beidseitig der Kalibermitte zwischen dieser und den Formwalzenkanten durch minimale stetige Änderung des Kreisbogenradius konkav eingezogen ist. Somit besteht der Kern der Erfindung darin, die Form der oberen konvexen Formwalze so abzuändern, daß eine zur Mitte der Walze symmetrische geringfügig wellenförmige Kontur entsteht.

Es hat sich gezeigt, daß eine derart ausgebildete obere Formwalze die Durchbiegung des ebenen Bandes beim Eintritt in den Spalt zwischen den Formwalzen im Mittenbereich abschwächt und dadurch die verschleißende starke Belastung der unteren Formwalze reduziert.

Die Änderung der oberen Formwalze ist einfach realisierbar. Dabei ist die Abweichung des eingeformten Bandes von der idealen Kreisabschnittform so gering, daß in den nachfolgenden Umformstufen keine Nachteile oder Abweichungen am fertigen Rohr zu erwarten sind.

In einer Ausgestaltung der Erfindung wird vorgeschlagen, daß die maximale Änderung des Radius in den Kaliberflanken 1 % bis 2 % der dicksten einzuformenden Banddicke beträgt. Schon eine so geringförmige Einziehung der Walzenkontur in den Flankenbereichen bewirkt, daß die Bandform nicht mehr elastisch nach unten ausknickt und die untere Formwalze verschleißt.

Ein besonders interessantes Anwendungsgebiet der Erfindung ist das Bandvorbiegen mit geteilter unterer Walze. Eine erfindungsgemäß geteilte untere Formwalze muß in der Gerüstmitte schwächer dimensioniert werden als bei einer ungeteilten Ausführung. Dem kommt die erfindungsgemäß erreichbare Verringerung der Banddurchbiegung im mittleren Bereich und damit die geringere Belastung entgegen.

Ein Ausführungsbeispiel der Erfindung ist in der Zeichnung dargestellt und wird nachfolgend beschrieben. Es zeigt:

Figur 1      eine obere und untere Formwalze mit kreisabschnittförmiger Kontur in der Ansicht,

Figur 2      die obere und untere Formwalze nach Figur 1 im Querschnitt

Figur 3      eine Walzenform nach dem Stand der Technik,

Figur 4      die erfindungsgemäße Walzenform,

Figur 5      ein Vorformgerüst mit geteilter unteren Formwalze

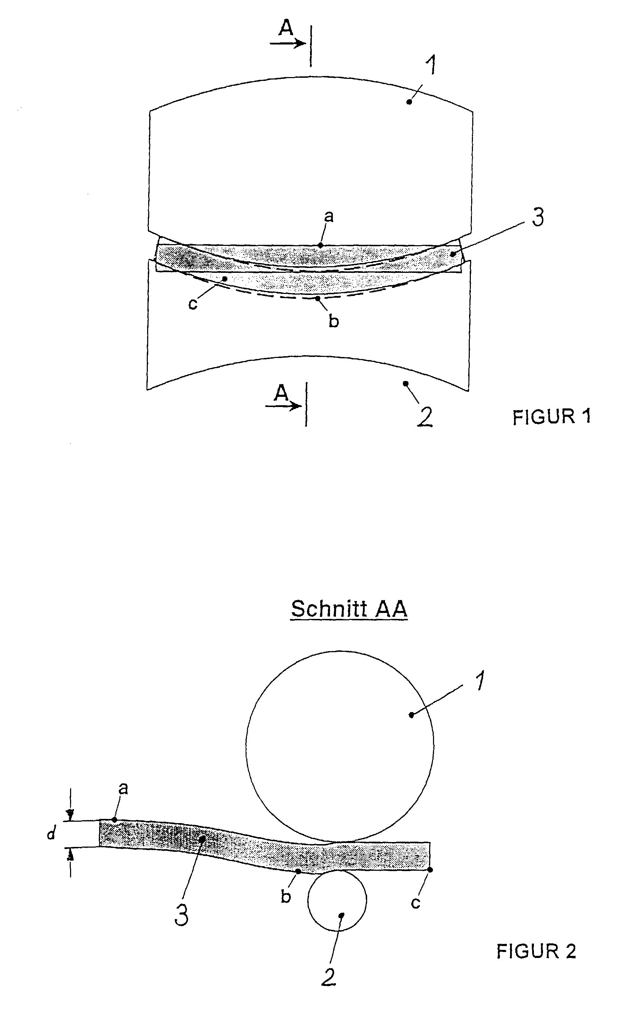

In Figur 1 ist schematisch eine konvexe obere Formwalze 1 gepaart mit einer konkaven unteren Formwalze 2 dargestellt, in die ein ebenes Band 3 einläuft und in dem Spalt zwischen der oberen 1 und unteren Formwalze 2 bogenförmig verformt wird. Um dies zu verdeutlichen sind die Positionen a, b und c am einlaufenden Band markiert und im Querschnitt durch das Formwalzenpaar 1,2 (Figur 2) gemäß Schnittlinie A-A eingetragen. Wie erkennbar, wird das zunächst ebene (Position a) Band 3 beim Eintritt in den Spalt zwischen der oberen Formwalze 1 und der unieren Formwalze 2 nach unten gekrümmt, wie dies bei Position b erkennbar ist. Erst nachdem das Band 3 aus dem Spalt zwischen der oberen 1 und der unteren Formwalze 2 ausgetreten ist, weist es eine bogenförmige Querschnittsform auf, die bei c dargestellt ist.

Die erkennbare Durchbiegung des mittleren Bandbereiches bei Position b verschleißt die untere Formwalze 2 durch die unnötig starke Belastung, so daß es zur Beschädigung der Oberfläche des Bandes 3 kommen kann.

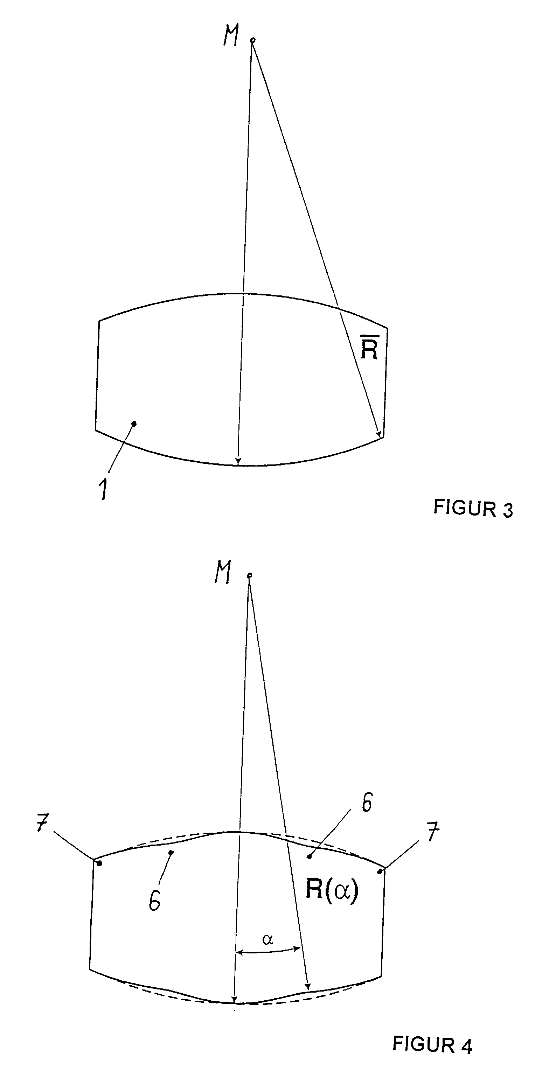

In Figur 3 ist die herkömmliche Kontur einer oberen Formwalze 1 im Vorbiegegerüst einer Rohrschweißanlage dargestellt; die Kontur verläuft nach einem Kreisbogen mit konstantem Radius R.

Die erfindungsgemäße Kontur der oberen Formwalze ist in der Figur 4 als Kaliberradius R in Abhängigkeit vom Winkel α dargestellt. Symmetrisch zur Mitte der Formwalze 1 wird dabei ein minimaler Wert des Kaliberradius R eingestellt; an den Rändern und in der Mitte der Formwalze 1 geht die Walzenkontur stetig in die bisher verwendete Kreisbogenkontur über. Mathematisch läßt sich die Forderung für die neue Kaliberform wie folgt darstellen:

$$\text{Walzmitte: } \frac{dR}{d\alpha}=0, \frac{d^2R}{d\alpha^2}<0$$

$$\text{Walzränder: } \frac{dR}{d\alpha}=0, \frac{d^2R}{d\alpha^2}<0$$

Die Wirkung der neuen Kaliberform beruht darauf, daß die Zone der größten plastischen Umformung aus dem Bereich der Flanken der Formwalze 1 in deren Walzenmitte verschoben wird. Dadurch knickt das Band 3 nicht mehr elastisch nach unten aus (Figur 1, Position b).

Als vorteilhaft erweist sich eine Verminderung des Kaliberradius in den Flankenbereichen um ca. 1 % bis 2 % von der dicksten einzuformenden Banddicke (d in Figur 2).

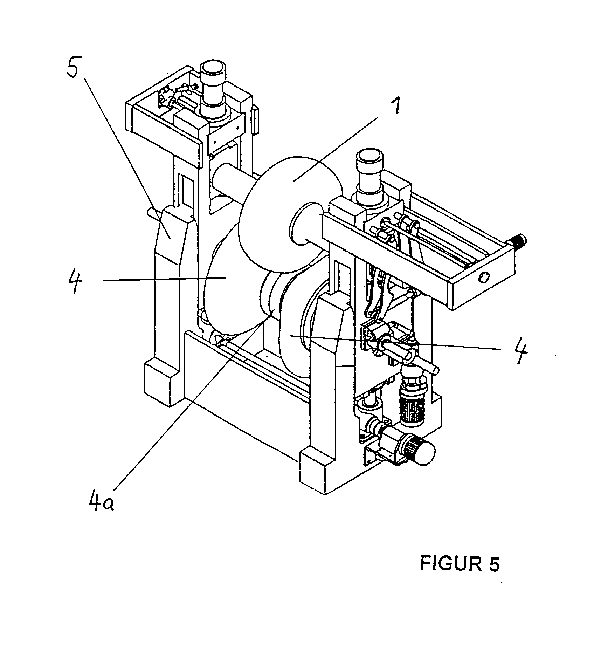

Ein besonders interessantes Anwendungsgebiet ist das Bandvorbiegen mit geteilter unterer Walze 4, wie dies in Figur 5 schematisch dargestellt ist. Die Teilwalze 4a in der Mitte des Vorformgerüstes 5 muß konstruktionsbedingt schwächer dimensioniert werden als bei einer ungeteilten Ausführung. Deshalb ist die Verringerung des Banddurchbiegens mit den erfindungsgemäßen Maßnahmen bei einem solchen Vorformgerüstes 5 besonders vorteilhaft.

**Patentansprüche**

1. Formwalzenpaar in einem Vorbiegegerüst einer Rohrschweißanlage zur Herstellung von längsnahtgeschweißten Rohren, in dem das einzuformende ebene Band mittels oberer konvexer und unterer konkaver Formwalzen zu der Vorform gebogen wird, aus der in nachfolgenden Verformungsstufen ein Schlitzrohr eingeformt wird, aus dem durch Längsnahtschweißen das fertige Rohr erzeugt wird,
dadurch gekennzeichnet,
daß die obere (1) und untere Formwalze (2) einen durch jeweils einen Kreisbogen beschreibbaren spiegelsymmetrischen Grundkonturschliff mit gemeinsamen Radienmittelpunkt (M) aufweist, der bei der oberen Formwalze (1) in deren Kaliberflankenbereichen (6) beidseitig der Kalibermitte zwischen dieser und den Formwalzenkanten (7) durch minimale stetige Änderung des Kreisbogenradius R konkav eingezogen ist.

2. Formwalzenpaar in einem Vorbiegegerüst einer Rohrschweißanlage nach Anspruch 1,
dadurch gekennzeichnet,
daß die maximale Änderung des Radius (R) in den Kaliberflanken (7) 1 bis 2 % der dicksten einzuformenden Banddicke (d) beträgt.

3. Formwalzenpaar in einem Vorbiegegerüst einer Rohrschweißanlage nach Anspruch 1 und 2,
dadurch gekennzeichnet,
daß die untere Formwalze (2) über ihre Länge in Querrichtung symmetrisch dreigeteilt ist.

A

1

a

3

c

b

A

2

FIGUR 1

## Schnitt AA

1

a

d

3

b

c

3

2

FIGUR 2

FIGUR 3

FIGUR 4

5

FIGUR 5